Europäisches Patentamt

European Patent Office

Office européen des brevets

(19)

(11) EP 0 728 893 A1

(12) **EUROPÄISCHE PATENTANMELDUNG**

(43) Veröffentlichungstag:
28.08.1996 Patentblatt 1996/35

(51) Int Cl.⁶: **E05F 15/00**

(21) Anmeldenummer: 96100471.0

(22) Anmeldetag: 15.01.1996

(84) Benannte Vertragsstaaten:
AT DE FR GB IT

(30) Priorität: 24.02.1995 DE 29503160 U

(71) Anmelder: **REHAU AG + Co**
95111 Rehau (DE)

(72) Erfinder: **Pennerath, Eddy**
D-95111 Rehau (DE)

(54) **Kontaktleiste für elektrische Leitungen**

(57) Die Erfindung betrifft eine Kontaktleiste (1) für elektrische Schaltungen. Die Kontaktleiste (1) besteht aus einer schlauchförmigen Hülle mit zwei an deren Innenwand gegenüberliegend angeordneten, längsverlaufenden Kontaktelementen (2,3). Die Kontaktelemente (2,3) selbst bestehen aus elektrisch leitendem Kunststoff und treten durch Zusammendrücken der schlauch-förmigen Hülle miteinander in elektrischen Schaltkontakt. Die Erfindung wird darin gesehen, daß zur Verringerung des Durchgangswiderstandes in die Kontaktelemente (2,3) längsverlaufende, metallische Leiter (4,5) eingebracht sind. Diese metallischen Leiter (4,5) verlaufen in vorgegebenem Abstand voneinander in einer Ebene, die parallel zur Querbiegeachse (Q) der schlauchförmigen Hülle angeordnet ist.

*Fig. 2*

Printed by Jouve, 75001 PARIS (FR)

## Beschreibung

Die Erfindung betrifft eine Kontaktleiste für elektrische Schaltungen, bestehend aus einer schlauchförmigen Hülle mit zwei an deren Innenwand gegenüberliegend angeordneten, längsverlaufenden Kontaktelementen, wobei die Kontaktelemente aus elektrisch leitendem Kunststoff bestehen und durch Zusammendrüken der schlauchförmigen Hülle miteinander in elektrischen Schaltkontakt treten.

In der DE 39 28 482 C1 ist ein Verfahren zur Herstellung einer solchen Kontaktleiste beschrieben. Es handelt sich dabei um koextrudierte Hohlkammerprofile aus elastomeren Werkstoffen, wobei in eine Hohlkammer aus isolierendem Werkstoff wenigstens eine mit elektrisch leitenden Füllstoffen versehene Profilschicht einextrudiert wird. Die Kontaktelemente treten nur durch Zusammendrücken des Hohlkammerprofils miteinander in Verbindung und bewirken auf diese Weise den Schaltvorgang. Dieser Schaltvorgang kann beispielsweise bei Fensterhebern und Schiebedächern im Automobilbau, bei Schiebe- bzw. Rolltoren usw. eingesetzt werden. Das Problem liegt beim Führen der Kontaktleiste um Eckbereiche von beispielsweise Fenstern in Kraftfahrzeugen, wobei durch die Elastizität des Hohlkammerprofils bei Führung dieses Profils um enge Radien eine Dauerkontaktierung der Kontaktleisten nicht ausgeschlossen werden kann.

Aus der CH 677 546 A5 ist ein aus elastisch deformierbarem Material bestehender elektrischer Kontaktschlauch bekannt, der ebenfalls eine äußere Hülle aufweist, in der einander gegenüberliegend zwei Kontaktleisten angeordnet sind. Diese Kontaktleisten weisen eine Breite auf, die sich praktisch über die gesamte Breite der Hülle erstreckt. Die äußere Hülle und die Kontaktleisten bestehen auch in diesem Fall aus Silikongummi, so daß sie zusammen im Extrusionsverfahren hergestellt werden können. Dem Silikongummi der Kontaktleisten sind elektrisch leitende Zusätze beigemengt, während die Hülle selbst aus nichtleitendem Material besteht.

Auch in diesem Fall ist die schädliche Dauerkontaktierung beim Führen dieses Profils um enge Radien nicht auszuschließen.

Hier setzt die Erfindung ein, die es sich zur Aufgabe gestellt hat, die Möglichkeit der schädlichen Dauerkontaktierung der Kontaktelemente in solchen Kontaktleisten weitgehend auszuschließen und darüberhinaus den Durchgangswiderstand der Kontaktelemente so niedrig wie möglich zu halten. Erfindungsgemäß wird dazu vorgeschlagen, daß zur Verringerung des Durchgangswiderstandes in die Kontaktelemente längsverlaufende, metallische Leiter eingebracht sind, welche in vorgegebenem Abstand voneinander in einer Ebene verlaufen, die parallel zur Querbiegeachse der schlauchförmigen Hülle angeordnet ist.

Es hat sich hierbei als vorteilhaft erwiesen, daß an jeweils einem der gegenüberliegenden Ränder der Kontaktelemente ein Verlängerungssteg angeformt ist, dessen freies Ende in einer Verdickung ausläuft, und daß die metallischen Leiter im Zentrum dieser Verdickung angeordnet sind. Es ist weiter zweckmäßig, daß die Kontaktelemente in einem definiertem Winkel schräg zur Mittelachse der schlauvhförmigen Hülle angeordnet sind.

Die erfindungsgemäße Kontaktleiste kann aus Elastomeren oder elastischen Materialien aufgebaut sein. Ein solches Material ist beispielsweise Silikonkautschuk, wobei die schlauchförmige Hülle und die Kontaktelemente aus diesem Material gemeinsam im Wege der Koextrusion extrudiert werden. Den Kontaktelementen ist dabei ein elektrisch leitfähiger Zusatz beigemengt, der beispielsweise aus Ruß, Metallpartikeln und dergleichen bestehen kann. Die Kontaktleiste kann in gleicher Weise auch aus nichtleitendem und leitendem Polyurethan, aus nichtleitendem und leitendem Santoprene oder ähnlichen Werkstoffen mit elastischem Verhalten aufgebaut sein.

Bei diesen aus Kunststoff mit leitfähigen Partikeln bestehenden Kontaktelementen ist die Höhe des Durchgangswiderstandes ein ausschlaggebender Faktor für die Durchführung des Schaltvorgangs.

Bei einer aus Polyurethan aufgebauten Kontaktleiste ist beispielsweise die schlauchförmige Hülle aus nichtleitfähigem, isolierenden Polyurethan und die Kontaktelemente sind aus leitfähigem Polyurethan hergestellt. An diesem leitfähigen Polyurethan wurden im Versuch folgende Werte gemessen:

$$\text{Querschnitt } 16 \text{ mm/m}^2 \ R = 2,5 \times 10^4 \text{ Ohm/m.}$$

Der spezifische Widerstand dieses leitfähigen Polyurethans beträgt 40 Ohm je cm Profillänge. Der spezifische Widerstand eines identischen Profils aus Silikonkautschuk beträgt dagegen lediglich 5 Ohm je cm Profillänge.

Obwohl damit vorrangig der Durchgangswiderstand von Kontaktelementen aus leitfähigem Polyurethan erfindungsgemäß durch die zusätzlichen metallischen Leiter herabgesetzt werden muß, empfiehlt es sich, diese metallischen Leiter auch bei Kontaktelementen aus leitfähigem Silikonkautschuk einzusetzen. Zum einen wird auch dort der spezifische Widerstand weiter herabgesetzt, zum anderen wird aber die Biegefähigkeit der Kontaktleiste positiv beeinflußt.

Hier bringt das Einbringen der metallischen Leiter in das Kontaktelement allein noch nicht den gewünschten positiven Effekt. Da solche Kontaktleisten über relativ enge Radien gebogen werden, können die steifen Metalldrähte nicht an beliebiger Stelle in die leitfähigen Segmente eingebracht werden, da in diesem Fall die Biegefähigkeit negativ beeinflußt würde und die Segmente beim Biegen über den Radius durch die mangelnde Elastizität der Metalldrähte miteinander kontaktieren könnten.

Der Nachteil der steifen Metalldrahteinlagen wird erfindungsgemäß dadurch ausgeglichen, daß die metallischen Leiter in einem vorgegebenem Abstand voneinander in einer Ebene verlaufen, die parallel zur Querbiegeachse der schlauchförmigen Hülle angeordnet ist. Wenn nämlich die steifen Metalldrähte auf derselben horizontalen Ebene in die Kontaktelemente eingebracht werden, dann bilden diese steifen Metalldrähte die neutrale Biegeachse. Die Kontaktelemente behalten in diesem Fall ihre elastischen Eigenschaften und können als Bestandteil der Kontaktleiste im Biegeradius gedehnt und komprimiert werden, ohne dabei in leitenden Kontakt zu kommen.

Die Anordnung der metallischen Leiter in vorgegebenem Abstand voneinander in einer Ebene der Kontaktelemente erfolgt dadurch, daß an die Kontaktelemente im gegenüberliegenden Randbereich jeweils ein Verlängerungssteg angeordnet ist, der an seinem freien Ende eine Verdickung trägt. Die metallischen Leiter sind im Zentrum dieser Verdickung angeordnet. Da die metallischen Leiter sich beide auf einer gleichen Ebene befinden, die parallel zur Querbiegeachse der schlauchförmigen Hülle angeordnet ist, behalten sie bei einem Biegeradius jeweils die gleiche Länge. Der eine Draht wird im Vergleich zum anderen Draht weder gedehnt noch komprimiert, während die Kontaktleiste um den Radius gebogen wird. Die beiden Metalldrähte bilden durch ihre Steifigkeit die neutrale Biegeachse der Kontaktleiste.

Die Anordnung der Kontaktelemente in einem definierten Winkel zur Querbiegeachse der schlauchförmigen Hülle bewirkt schließlich, daß die Kontaktleiste in allen Schließpositionen beispielsweise eines Automobilfensters ihre Wirkung entfalten kann, indem die Kontaktelemente bei allen denkbaren Positionen der Einwirkung einer Kraft von außen miteinander in Berührung kommen können. Dieser definierte Winkel beträgt im Beispielsfall 15°. Durch diese Winkelstellung wird beim Schließen eines Automobilfensters und Einklemmen eines Fremdkörpers der Kontakt über die aufeinandertreffenden Kontaktelemente geschlossen und damit der Schließvorgang elektrisch unterbrochen.

In der Zeichnung ist ein Ausführungsbeispiel der erfindungsgemäßen Kontaktleiste schematisch dargestellt; es zeigt:

Fig. 1 die Kontaktleiste im Querschnitt
Fig. 2 die Kontaktleiste in Biegestellung

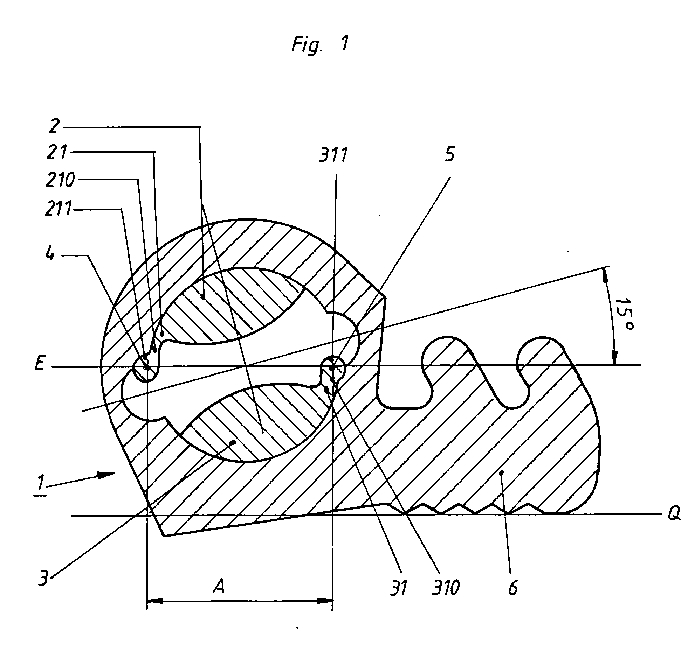

Fig. 1 zeigt die Kontaktleiste mit den beiden Kontaktelementen 2, 3. In die Kontaktelemente 2, 3 sind die metallischen Leiter 4, 5 eingebracht. Diese metallischen Leiter 4, 5 verlaufen im vorgegebenen Abstand A voneinander. Beide metallischen leiter 4, 5 liegen in der Ebene E, welche parallel zur Querbiegeachse Q der schlauchförmigen Hülle 1 angeordnet ist.

Die schlauchförmige Hülle 1 besitzt in der dargestellten Form einen fußartigen Fortsatz 6, der zur Befestigung der schlauchförmigen Hülle 1 an beispielsweise einer Kraftfahrzeug-Karosserie dient.

An den gegenüberliegenden Rändern 21, 31 der Kontaktelemente 2, 3 ist jeweils ein Verlängerungssteg 210, 310 angeformt, dessen freies Ende in einer Verdickung 211, 311 ausläuft. In das Zentrum dieser Verdickung 211, 311 sind die metallischen Leiter 4, 5 eingebracht. Diese metallischen Leiter können aus Drähten, Spiralen oder ähnlichen Figurationen bestehen.

Aus Fg. 1 geht weiter hervor, daß die Kontaktelemente 2, 3 in einem definierten Winkel ALPHA zur Querbiegeachse Q der schlauchförmigen Hülle 1 angeordnet sind. Im Bedarfsfall kann dieser Anstellwinkel ALPHA, der im Beispielsfall mit 15° angegeben ist, entsprechend variiert werden. Bei dieser Winkelvariation kann ein Bereich zwischen 0° und 45° abgedeckt werden.

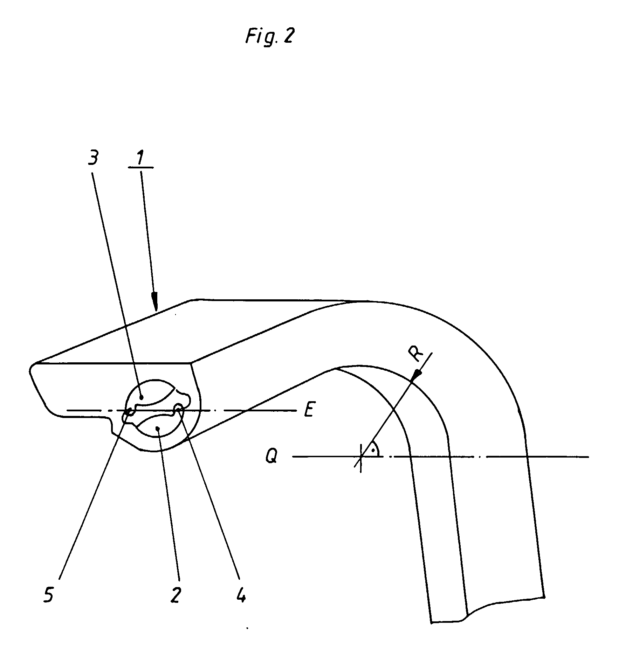

Fig. 2 zeigt die Kontaktleiste mit der schlauchförmigen Hülle 1, den Kontaktelementen 2, 3 und den metallischen Leitern 4, 5 in Biegestellung über die Querbiegeachse Q.

Beim erfindungsgemäßen Aufbau der Kontaktleiste kann der Biegeradius R = 15 sein, ohne daß die beiden Kontaktelemente 2, 3 im Radiusbereich miteinander kontaktieren würden.

## Patentansprüche

1. Kontaktleiste für elektrische Schaltungen, bestehend aus einer schlauchförmigen Hülle mit zwei an deren Innenwand gegenüberliegend angeordneten, längsverlaufenden Kontaktelementen, wobei die Kontaktelemente aus elektrisch leitendem Kunststoff bestehen und durch Zusammendrücken der schlauchförmigen Hülle miteinander in elektrischen Schaltkontakt treten, dadurch gekennzeichnet, daß zur Verringerung des Durchgangswiderstandes in die Kontaktelemente (2, 3) längsverlaufende, metallische Leiter (4, 5) eingebracht sind, welche in vorgegebenem Abstand (A) voneinander in einer Ebene (E) verlaufen, die parallel zur Querbiegeachse (Q) der schlauchförmigen Hülle (1) angeordnet ist.

2. Kontaktleiste nach Anspruch 1, dadurch gekennzeichnet, daß an jeweils einem der gegenüberliegenden Ränder (21, 31) der Kontaktelemente (2, 3) ein Verlängerungssteg (210, 310) angeformt ist, dessen freies Ende in einer Verdickung (211, 311) ausläuft, und daß die metallischen Leiter (4, 5) im Zentrum dieser Verdickung (211, 311) angeordnet sind.

3. Kontaktleiste nach Anspruch 1, dadurch gekennzeichnet, daß die Kontaktelemente (2, 3) in einem definierten Winkel (ALPHA) zur Querbiegeachse (Q) der schlauchförmigen Hülle (1) angeordnet sind.

Fig. 1

15°

Fig. 2

**Europäisches Patentamt**

# EUROPÄISCHER RECHERCHENBERICHT

Nummer der Anmeldung

EP 96 10 0471

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 539 887 (BECKHAUSEN)<br>* Spalte 3, Zeile 43 - Spalte 4, Zeile 10; Ansprüche 1,3; Abbildung 1 *<br>----- | 1,3 | E05F15/00 |
| | | | **RECHERCHIERTE SACHGEBIETE (Int.Cl.6)**<br><br>E05F |

Der vorliegende Recherchenbericht wurde für alle Patentansprüche erstellt

| Recherchenort | Abschlußdatum der Recherche | Prüfer |
|---|---|---|
| DEN HAAG | 5.Juni 1996 | Guillaume, G |

EPO FORM 1503 03.82 (P04C03)